# EUROPEAN PATENT APPLICATION

(11) **EP 2 530 271 A2**
(43) Date of publication of application: **05.12.2012**
(21) Application number: 12169625.6
(22) Date of filing: 25.05.2012
(51) Int. Cl.: F01P 3/18

(54) **Combined heat exchanger system**

(30) Priority: 27.05.2011 JP 2011118715; 27.05.2011 JP 2011118713
(71) Applicant: Calsonic Kansei Corporation, Saitama-shi Saitama-ken 331-8501 (JP)
(72) Inventor: Masuda, Akira, Saitama-ken, 331-8501 (JP); Inaba, Hiroyuki, Saitama-ken, 331-8501 (JP); Haneda, Satoshi, Saitama-ken, 331-8501 (JP); Kawaguchi, Tatsunari, Saitama-ken, 331-8501 (JP); Watanabe, Toshiharu, Saitama-ken, 331-8501 (JP); Tsuda, Masahiro, Saitama-ken, 331-8501 (JP)
(74) Representative: Oxley, Robin John George

(57) **Abstract**

A combined heat exchanger system includes a first heat exchanger (1) for cooling a first cooling medium, a second heat exchanger (2) for cooling a second cooling medium, and a compressor (8) for compressing the first cooling medium to be supplied to the first heat exchanger (1). The first heat exchanger (1) is separated from the second heat exchanger (2), being integrally assembled with the compressor (8) in such a way that the first compressor (1) can be directly and fluidically connected with the compressor (8). The first heat exchanger (1) liquid-cools the first cooling medium, which is outputted from the compressor (8), by using the second cooling medium that is cooled by the second heat exchanger (2).

## Description

The present invention relates to a combined heat exchanger system including a plurality of heat exchangers that are respectively connected with an engine and an air conditioning system for example.

A conventional combined heat exchanger system of this kind is disclosed in Japanese Patent Applications Laid-Open Publication N0. 2010-121604, No. 2010-127508 and No. 2006-199206.

The first conventional combined heat exchanger system has a first air-cooling heat exchanger (a subradiator), a second air-cooling heat exchanger (a condenser), and a third air-cooling heat exchanger (a radiator). The first air-cooling heat exchanger cools a coolant to draw heat from a heat element other than an internal combustion engine. The second air-cooling heat exchanger cools a cooling medium of an air conditioning system. The third air-cooling heat exchanger cools a coolant of an internal combustion engine. The first air-cooling heat exchanger and the third air-cooling heat exchanger are constructed in such a way as to have a core part including a plurality of tubes and radiation fins that are alternately piled up, left tank and right tank that are connected with each other through the tubes. The third air-cooling heat exchanger is constructed in such a way as to have a core part with a width narrower than that of the first air-cooling heat exchanger so as to be insertable between the left tank and the right tank of the first air-cooling heat exchanger.

On the other hand, the second conventional combined heat exchanger system has a radiator, a first air-cooling heat exchanger (a subradiator), and a second air-cooling heat exchanger (a condenser). The radiator cools a coolant of an internal combustion engine. The first air-cooling heat exchanger cools a coolant of a heat element other than an internal combustion engine. The second air-cooling heat exchanger cools a cooling medium of an air conditioning system. The first air-cooling heat exchanger is constructed in such a way as to have a coolant inlet-side tank, a coolant outlet-side tank, a plurality of tubes that connect the both tanks with each other in a state where the tubes and radiation fins are alternately piled up, and a water-cooling heat exchanger (a condenser) for cooling a cooling medium of the air conditioning system. The condenser is arranged in the interior of the coolant outlet-side tank. The cooling medium flows in the condenser through an upper side portion of the condenser and then it flows out of the condenser to be directed to the second air-cooling heat exchanger. This avoids oil from being accumulated in the lower side portion of the condenser, thereby improving a heat exchange effectiveness, providing a compressor with sufficient lubrication oil, and suppressing degradation in the coolability and the reliability of the cooling system.

The third conventional combined heat exchanger system has a vehicle on-board electric part cooling system using a coolant, an air conditioning system using a refrigerant, and a water cooling device for cooling the refrigerant by the coolant due to heat exchange therebetween.

However, in the above known conventional combined heat exchanger systems, the radiator is arranged in such a way as to be separated from the other heat exchangers in a longitudinal direction of a vehicle because the radiator generates the largest amount of heat and accordingly it needs the largest size to cool the coolant of the engine.
Many heat exchangers are needed to be mounted on a vehicle such as a hybrid electric vehicle, and in this case the heat exchangers are arranged in a plurality of rows in the longitudinal direction of the vehicle.
This deteriorates a heat exchange effectiveness of the heat exchanger/heat exchangers that are arranged at the rear side of the vehicle.

On the other hand, it is difficult to ensure the heat exchangers to have sufficient areas for heat exchange in the case where the number of rows is decreased by arranging the heat exchangers as many as possible on the same lateral plane of the vehicle.
Thus, as the number of heat exchangers increases, it becomes difficult to ensure sufficient heat-exchange surfaces of the heat exchangers, and the number of longitudinal-directional rows of the heat exchangers increases, thereby causing the deterioration in easy mounting on the vehicle and heat exchange effectiveness of the heat exchangers.
In addition, their piping work becomes heavy because of many pipes.

The present invention seeks, therefore, to provide a combined heat exchanger system which overcomes the foregoing drawbacks and can have a sufficient area of each heat exchanger, improving heat exchange effectiveness of the heat exchangers, and providing easy mounting and piping of the heat exchangers on the vehicle.

According to a first aspect of the present invention there is provided a combined heat exchanger system including a first heat exchanger for cooling a first cooling medium, a second heat exchanger for cooling a second cooling medium, and a compressor for compressing the first cooling medium. The first heat exchanger is configured to be separated from the second heat exchanger, being configured to be integrally assembled with the compressor in such a way that the first heat exchanger can be directly and fluidically connected with the compressor. The first heat exchanger liquid-cools the first cooling medium, which is outputted from the compressor, by using the second cooling medium that is cooled by the second heat exchanger.

Therefore, the combined heat exchanger system of the invention can have sufficient areas of the first and second heat exchangers, improving heat exchange effectiveness of the heat exchangers, and providing easy mounting and piping of the heat exchangers on the vehicle.

Preferably, the combined heat exchanger system further includes a third heat exchanger that is separated from the first heat exchanger. The second heat exchanger air-cools the second cooling medium that is outputted through the first heat exchanger, and the third heat exchanger is connected with the first heat exchanger to air-cool the first cooling medium that is outputted through the first heat exchanger.

Therefore, the combined heat exchanger system can have sufficient areas of the first, second and third heat exchangers, improving heat exchange effectiveness of the heat exchangers, and providing easy mounting of the heat exchangers on the vehicle.

Preferably, the first heat exchanger is integrally connected with a rear head of the compressor to introduce the second cooling medium passing through the compressor to cool the first cooling medium.

Therefore, the integration of the condenser and the compressor, and the liquid-cooling of the first cooling medium in the condenser can provide a smaller installation space thereof.

Preferably, a downstream side of the first heat exchanger is connected with an upstream side of the second heat exchanger, and a downstream side of the second heat exchanger is connected with an upstream side of the first heat exchanger through a cooling device of a vehicle on-board unit.

Therefore, the second cooling medium that is cooled by the second heat exchanger can liquid-cool the vehicle on-board unit and then it can liquid-cool the first cooling medium in the first heat exchanger.

Preferably, the first cooling medium is a refrigerant, and the second cooling medium is a coolant.

Therefore, the combined heat exchanger system can optimally cool different kinds of cooling medium that is used for different cooling systems.

Preferably, the first heat exchanger is a condenser, and the second heat exchanger is a radiator.

Therefore, the combined heat exchanger system can optimally cool the coolant and the refrigerant that are used for different cooling systems such as a vehicle on-board unit cooling system and an air conditioning system.

Preferably, the first heat exchanger is a condenser, and the third heat exchanger is a subcooling condenser.

Therefore, the combined heat exchanger system can optimally cool the first cooling medium that is used for the air conditioning system.

Preferably, the combined heat exchanger system further includes a receiver that is capable of accumulating the first cooling medium, and the receiver is connected with one of an upstream side and a downstream side of the subcooling condenser.

Therefore, the receiver can be arranged at one of the upstream side and the downstream side of the subcooling condenser. This improves a freedom of design and the installation of the heat exchangers and the receiver, ensuring the optimal amount of accumulated cooling medium.

Preferably, the receiver is arranged at one of between the first heat exchanger and the third heat exchanger and between the third heat exchanger and an expansion device.

Therefore, a freedom of design and the installation of the heat exchangers and the receiver can be increased. In addition, the receiver can ensure the optimal amount of accumulated cooling medium.

Preferably, the combined heat exchanger system further includes a fourth heat exchanger that air-cools a third cooling medium, and at least one of the second heat exchanger and the third heat exchanger is arranged in a vehicle front side of the fourth heat exchanger.

Therefore, the fourth heat exchanger can cool the third cooling medium that is used for another cooling circuit. In addition, the second heat exchanger and the third heat exchanger can be efficiently cooled by air flow.

Preferably, the fourth heat exchanger is a main radiator, and the third cooling medium is a coolant.

Therefore, the fourth heat exchanger can sufficiently cool a heat element such as an engine that generates a large amount of heat.

Preferably, the main radiator cools the coolant that circulates between the main radiator and an internal combustion engine.

Therefore, the combined heat exchanger system can cool the engine.

Preferably, the first heat exchanger and the third heat exchanger are used for an air conditioning system, and the second heat exchanger is used for a vehicle on-board unit cooling system.

Therefore, the first heat exchanger and the third heat exchanger can cool the first cooling medium circulating in the air conditioning system, and the second heat exchanger can cool the first cooling medium and the second cooling medium circulating in the vehicle on-board unit cooling system.

Preferably, the combined heat exchanger system is mounted on a hybrid electric vehicle.

Therefore, the combined heat exchanger system can efficiently and sufficiently cool power units such as an engine, an electric motor and an inverter in addition to an air conditioning system of the hybrid electric vehicle.

The features and advantages of the present invention will become apparent as the description proceeds when taken in conjunction with the accompanying drawing, in which:

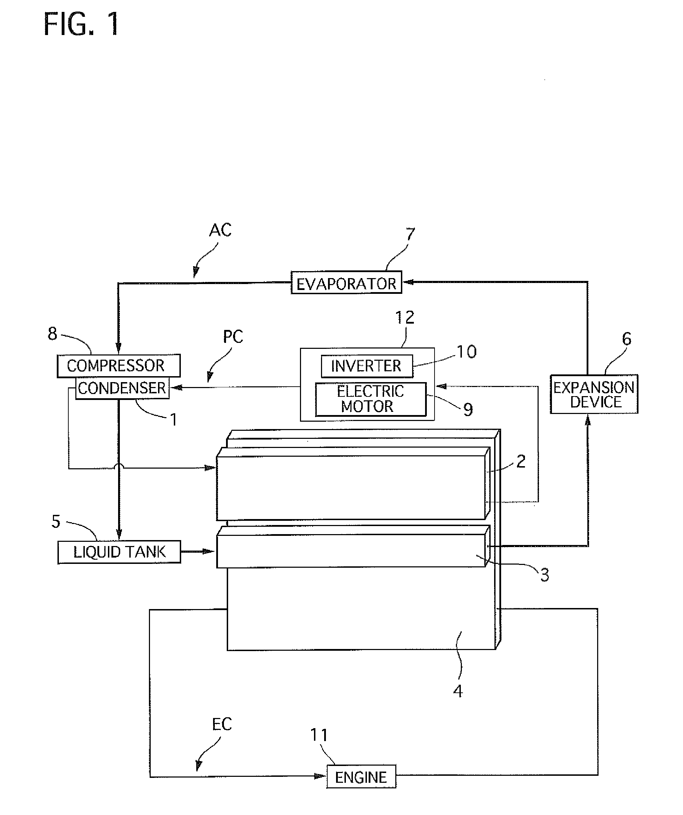

FIG. 1 is a view showing a combined heat exchanger of a first embodiment according to the present invention.

Referring to FIG. 1 of the drawing, there is shown a first preferred embodiment of a combined heat exchanger system according to the present invention.

The combined heat exchanger system of the first embodiment is used in a hybrid electric vehicle that is equipped with an internal combustion engine 11 and an electric motor 9 as a drive unit.
The hybrid electric vehicle includes an engine cooling circuit EC for cooling a water-based coolant of the engine 11, an air conditioning circuit AC for cooling a refrigerant of an air conditioner, and a power unit cooling circuit PC for cooling another water-based coolant of a cooling device 12 of the electric motor 9 and other electric units such as an inverter 10. Incidentally, the coolant is a working fluid to transfer heat in a cooling system, and the water is the base coolant, to which chemicals such as ethylene glycol and propylene glycol are added to lower its freezing point and raise its boiling point.

On the other hand, the refrigerant employs HFC-134a for example.

The combined heat exchanger system has a condenser 1, a subradiator 2, a subcooling condenser 3, a main radiator 4, a liquid tank 5, an expansion device 6, an evaporator 7, and a compressor 8. The main radiator 4 belongs to the engine cooling circuit EC where the coolant circulates, the subradiator 2 belongs to the power unit cooling circuit PC where the other coolant circulates, and the compressor 1, the subcooling condenser 3, the liquid tank 5, the expansion device 6, the evaporator 7 and the compressor 8 belong to the air conditioning circuit AC where the refrigerant circulates. Incidentally, the coolant circulating in the power unit cooling circuit PC corresponds to a first coolant of the present invention, and the coolant circulating in the engine cooling circuit EC corresponds to a second coolant of the present invention.

The condenser 1 is located next to a rear head of the compressor 8, and they are integrally connected with each other so that the refrigerant outputted from an outlet port formed in the rear head of the compressor 8 can flow in an inlet port of the condenser 1.
The condenser 1 is fluidically communicated with the outlet port of the compressor 8, an outlet port of the subradiator 2 through the electric motor 9 and the inverter 10, and an inlet port of the liquid tank 5. In the condenser 1, the refrigerant circulating in the air conditioning circuit AC flows independently from the coolant circulating in the power unit cooling circuit PC, while they flow adjacently to each other in the condenser 1 to exchange heat therebetween. That is, in the condenser 1, the refrigerant outputted through the outlet port of the compressor 8 is liquid-cooled down to one in a liquid phase by the heat exchange with the coolant, and then it is sent to the inlet port of the liquid tank 5. On the other hand, the coolant outputted from the cooling device 12 is cooled down by the air flow passing through the condenser 1 with not-shown tubes and radiation fins, and then it flows out and enters the subradiator 2.

Incidentally, the condenser 1 corresponds to a first heat exchanger of the present invention, and the refrigerant in the air conditioning circuit AC corresponds to a first cooling medium of the present invention.

The compressor 8 employs a variable discharge volume type compressor in this embodiment to vary its discharge volume from several percentages to 100 percentages according to a volume control signal outputted from a not-shown controller and inputted to a not shown electromagnetic valve. The compressor 8 is belt-driven by a not-shown electric motor through a not-shown electromagnetic clutch, pulleys and belt which are provided on a front head side of the compressor 8.

The subradiator 2 has a core part with a left tank, a right tank, and a plurality of tubes and radiation fins that are alternately piled up, the core part being arranged between the left and right tanks. The subradiator 2 has an inlet port that is fluidically connected with the outlet port of the condenser 1, and it further air-cools the coolant cooled in the condenser 1. An outlet port of the subradiator 2 is fluidically connected with the cooling device 12 of the electric motor 9 and the inverter 10 through a pipe to cool them.
Incidentally, the subradiator 2 corresponds to a second heat exchanger of the present invention, the coolant in the power unit cooling circuit PC corresponds to a second cooling medium of the present invention, and the power unit cooling circuit PC corresponds to a vehicle on-board unit cooling system of the present invention.

The subcooling condenser 3 has a core part with a left tank, a right tank, and a plurality of tubes and radiation fins that are alternately piled up, the core part being arranged between the left and right tanks. An inlet port of the subcooling condenser 3 is fluidically connected with an outlet port of the liquid tank 5, while an outlet port of the subcooling condenser 3 is fluidically connected with an inlet port of the expansion device 6. The subcooling condenser 3 air-cools the refrigerant outputted through the liquid tank 5 to change it to subcooled liquid (namely supercooled liquid) and then discharge to the expansion device 6.
Incidentally, the subcooling condenser 3 corresponds to a third heat exchanger of the present invention.

The liquid tank 5 is arranged to fluidically connect between the condenser 1 and the subcooling condenser 3 through pipes. The liquid tank 5 has a not-shown filter part therein to remove water and a foreign substance contained in the refrigerant. The refrigerant is gas-liquid separated in the liquid tank 5, where the superfluous refrigerant is temporarily accumulated therein to be supplied for a rapid cooling.
Incidentally, the liquid tank 5 corresponds to a receiver of the present invention.

The expansion device 6 has a narrow aperture portion such as an orifice tube portion, through which the subcooled refrigerant outputted at high temperature and high pressure through the subcooling condenser 3 is injected to change as a spray of the refrigerant at lower temperature and lower pressure. The spray of the refrigerant is sent to the evaporator 7.

The evaporator 7 is arranged in a fan duct of a not-shown air conditioner unit that is connected with an interior of a passenger compartment, and it vapors the refrigerant at low temperature and low pressure due to decompression and expansion of the refrigerant that has passed through the expansion device 6. The heat from the air causes the refrigerant spray to turn into a vapor. The evaporator 7 is cooled down due to the heat of vaporization of the refrigerant. As a result, the passing air is also cooled down, and it enters the interior of the passenger compartment. On the other hand, the refrigerant flows and enters an inlet port of the compressor 8.

The main radiator 4 has a core part with a left tank, a right tank, and a plurality of tubes and radiation fins that are alternately piled up, the core part being arranged between the left and right tanks. The main radiator 4 cools the coolant other than that of the subradiator 3 so that the coolant circulates between the main radiator 4 and the engine 11. The core part of the main radiator 4 is larger in area than those of the subradiator 3 and subcooling condenser 3. A not-shown motor fan is provided behind the main radiator 4 to generate an air flow when the vehicle is parked or it runs at very low speed.
Incidentally, the main radiator 4 corresponds to the fourth heat exchanger of the present invention, and the coolant in the engine cooling circuit EC corresponds to a third cooling medium of the present invention.

The electric motor 9 employs a three-phase alternating current motor/generator, for example, to drive the vehicle and generate electric power when the vehicle is braking. The electric motor 9 generates a large amount of heat when it is activated.

The inverter 10 controls the electric power to be supplied to the electric motor 9 based on the operational amount of an acceleration pedal, a vehicle speed and others.

The cooling device 12 includes a coolant passage portion formed around the electric motor 9 and a coolant passage table on which the inverter 10 is placed for example.

Incidentally, the constructions of the condenser 1, the subradiator 2, the subcooling condenser 3, the main radiator 4, the liquid tank 5, the expansion device 6, the evaporator 6, the compressor 8, the electric motor 9, the inverter 10, and the cooling device 12 are well known, and accordingly their details are not described.

In the combined heat exchanger system of the first embodiment, the subradiator 2 is arranged above the subcooling condenser 3 on the same vertical plane thereof, and they are arranged at the air-flow upstream side of and in the front of the main radiator 4.

The condenser 1 is connected with the compressor 8, being apart from and in the rear of the subradiator 2, the subcooling condenser 3 and the main radiator 4. In addition, the condenser 1 liquid-cools the refrigerant in this embodiment, although conventional condensers and subcooling condensers are constructed as one unit and the conventional condensers air-cool a refrigerant.

The operation of the combined heat exchanger system of the first embodiment will be described.
In the engine cooling circuit EC, the coolant is cooled at the core part of the main radiator 4 by the air flow passing through the main radiator 4, and then it enters a not-shown cooling part of the engine 11 to cool it. The coolant exchanges heat with the engine 11, and thus the coolant is warmed up and returns to the main radiator 4 to be cooled down.

In the power unit cooling circuit PC, the coolant other from the coolant circulating in the engine cooling circuit EC is cooled down by the air flow passing through the condenser 1 and the subradiator 2 while it flows therethrough. The cooled coolant enters the cooling device 12 of the electric motor 9 and the inverter 10 to cool them to maintain their temperature in an adequate temperature range.
Then the coolant returns to the condenser 1, where the coolant is cooled down by the air flow, and the coolant cools the refrigerant in the air conditioning circuit AC flowing adjacently to the coolant in the condenser 1.

In the air conditioning circuit AC, the refrigerant is compressed by the compressor 8 into a gas state at high temperature and high pressure, and it is outputted to enter the condenser 1. The refrigerant is cooled down by the coolant passing through the condenser 1 to be liquefied. The liquefied refrigerant is gas-liquid separated in the liquid tank 5, and a part of the superfluous refrigerant is sent to the subcooling condenser 3.
The refrigerant, which contains some gas, is overcooled by the subcooling condenser 3 to turn to the almost entire liquid refrigerant. Then it is sent to the expansion device 6, where it passes through the orifice tube portion and then it expands to turn out to the spray of the refrigerant at low temperature and low pressure.
The spray is sent to the evaporator 7, where it vapors to exchange heat with the air passing through the evaporator 7. This cools the air, and the cooled air is introduced into the interior of the passenger compartment.
The refrigerant outputted from the evaporator 7 is sent to the compressor 8, where it turns to the gas at high temperature and high pressure so as to be easily liquefied in the condenser 1.

In the cooling operation, the large amount of the air flow can pass through the subradiator 2 and the subcooling condenser 3 that respectively air-cools the coolant and the refrigerant, because the condenser 1, which liquid-cools the refrigerant by the coolant outputted from the compressor 8, is arranged in the rear of the main radiator 4. This improves the coolability of the subradiator 2, the subcooling condenser 3 and the main radiator 4. On the other hand, the condenser 1 liquid-cools the refrigerant by the coolant in the power unit cooling circuit PC, and accordingly it can sufficiently cool the refrigerant even at the rear side of the main radiator 4 and other heat exchangers 2, 3 before the refrigerant is cooled in the sub-cooling condenser 3.

The combined heat exchanger system of the first embodiment has the following advantages.
In the combined heat exchanger system of the first embodiment, the condenser 1 cools the refrigerant in the air conditioning circuit AC by using the coolant in the power unit cooling circuit PC, and accordingly the condenser 1 can be arranged at the rear side of the main radiator 4, sufficiently cooling the refrigerant. This enables the subradiator 2 and the subcooling condenser 3 to have larger areas of the core parts thereof, because an installation space for them increases as the condenser 1 is removed.

In addition, the subradiator 2 and the subcooling condenser 3 is arranged in the front of the main radiator 4, and accordingly the air flow at lower temperature can cool the subradiator 2 and the subcooling condenser 3 before the air is warmed up by the other heat exchanger (the main radiator 4). This also improves the heat exchange efficiency of the subradiator 2 and the subcooling condenser 3.

The total area of the subradiator 2 and the subcooling condenser 3 is smaller than that of the subradiator 2 and the conventional condenser (corresponding to the condenser 1 and the subcooling condenser 3 of the first embodiment). Therefore, the amount of the air flow that directly hit the main radiator 4 is larger than that of the conventional combined heat exchanger system, thereby improving the heat exchange efficiency of the main radiator 4.

On the other hand, the condenser 1 is changed to cool the refrigerant from by air-cooling to by liquid-cooling, and accordingly the heat transfer efficiency of the condenser 1 increases and the size of the condenser 1 can be decreased.

In the conventional combined heat exchanger system, all parts such as a condenser and a subradiator are located near a main radiator. Consequently, piping work between them becomes heavy. On the other hand, in the first embodiment, piping work becomes easier than that in the conventional combined heat exchanger system because the condenser 1 is located apart from the subradiator 2, the subcooling condenser 3 and the main radiator 4. In addition, the condenser 1 and the compressor 8 are integrally assembled with each other, and accordingly there is no need for a pipe work therebetween.

While there have been particularly shown and described with reference to preferred embodiments thereof, it will be understood that various modifications may be made therein.

For example, although the subcooling condenser 3 and the subradiator 2 are arranged in the front of the main radiator 4, that is, at the upstream side of the air flow passing therethrough in the first embodiment, the arrangement of them may be appropriately set.
Only one of the subradiator 2 and the subcooling condenser 3 may be arranged in the front of the main radiator 4, and the other thereof may be arranged in the rear of the main radiator 4 or on the same plane of the main radiator 4. In this case, it can also provide sufficient coolability of the heat exchangers.

The liquid tank 5 may be arranged between the subcooling condenser 3 and the expansion device 6 instead of between the condenser 1 and the subcooling condenser 3.

The combined heat exchanger system is mounted on the hybrid electric vehicle in the first embodiment, while it may be applied on other kinds of vehicles such as electric vehicles. In applying to the electric vehicle, the main radiator 4 is removed.

The power unit cooling circuit PC may be replaced by other cooling circuits using the coolant to cool a vehicle on-board unit as a heat element.

## Claims

1. A combined heat exchanger system comprising:
a first heat exchanger (1) for cooling a first cooling medium;
a second heat exchanger(2) for cooling a second cooling medium; and
a compressor (8) for compressing the first cooling medium, and
wherein the first heat exchanger (1) is configured to be separated from the second heat exchanger (2), being configured to be integrally assembled with the compressor (8) in such a way that the first heat exchanger (1) can be directly and fluidically connected with the compressor (8), and
wherein the first heat exchanger (1) is for liquid-cooling the first cooling medium, which is outputted from the compressor (8), by using the second cooling medium that is cooled by the second heat exchanger (2).

2. A combined heat exchanger system according to claim 1, further comprising:
a third heat exchanger (3) being separated from the first heat exchanger (1),
wherein the second heat exchanger (2) is for air-cooling the second cooling medium that is outputted through the first heat exchanger (1), and
wherein the third heat exchanger (3) is connected with the first heat exchanger (1) to air-cool the first cooling medium that is outputted through the first heat exchanger (1).

3. A combined heat exchanger system according to claim 1 or 2, wherein the first heat exchanger (1) is integrally connected with a rear head of the compressor (8) to introduce the second cooling medium passing through the compressor (8) to cool the first cooling medium.

4. A combined heat exchanger system according to any one of claims 1 to 3, wherein a downstream side of the first heat exchanger (1) is connected with an upstream side of the second heat exchanger (2), and
wherein a downstream side of the second heat exchanger (2) is connected with an upstream side of the first heat exchanger (1) through a cooling device (12) of a vehicle on-board unit (9, 10).

5. A combined heat exchanger system according to any one of claims 1 to 4, wherein the first cooling medium comprises a refrigerant, and
wherein the second cooling medium comprises a coolant.

6. A combined heat exchanger system according to any one of claims 1 to 5, wherein the first heat exchanger comprises a condenser (1), and
wherein the second heat exchanger comprises a radiator(2).

7. A combined heat exchanger system according to claim 2 or any preceding claim dependent thereon, wherein the first heat exchanger comprises a condenser (1), and
wherein the third heat exchanger comprises a subcooling condenser (3).

8. A combined heat exchanger system according to claim 7, further comprising:
a receiver (5) being capable of accumulating the first cooling medium, and
wherein the receiver (5) is connected with one of an upstream side and a downstream side of the subcooling condenser (3).

9. A combined heat exchanger system according to claim 8, wherein the receiver (5) is arranged at one of between the first heat exchanger (1) and the third heat exchanger (3) and between the third heat exchanger (3) and an expansion device (6).

10. A combined heat exchanger system according to claim 2 or any preceding claim dependent thereon, further comprising:
a fourth heat exchanger (4) for air-cooling a third cooling medium,
wherein at least one of the second heat exchanger (2) and the third heat exchanger (3) is arranged in a vehicle front of the fourth heat exchanger (4).

11. A combined heat exchanger system according to claim 10, wherein the fourth heat exchanger comprises a main radiator (4),
wherein the third cooling medium comprises a coolant.

12. A combined heat exchanger system according to claim 11, wherein the main radiator (4) is for cooling the coolant that circulates between the main radiator (4) and an internal combustion engine (11).

13. A combined heat exchanger system according to any one of claims 1 to 12, wherein the combined heat exchanger system is mounted on a hybrid electric vehicle.
